# EUROPEAN PATENT APPLICATION

(11) **EP 4 759 145 A1**
(43) Date of publication of application: **17.06.2026**
(21) Application number: 24851963.9
(22) Date of filing: 09.08.2024
(51) Int. Cl.: A23L 2/38, A23L 2/00, A23L 2/52

(54) **CEREAL-BASED MILK, AND PRODUCTION METHOD AND RICHNESS-ENHANCING METHOD FOR SAME**

(30) Priority: 10.08.2023 JP 2023130630
(71) Applicant: Mitsubishi Chemical Corporation, Tokyo 100-8251 (JP)
(72) Inventor: HARA, Hideyuki, Tokyo 100-8251 (JP); TAKAHASHI, Eigo, Tokyo 100-8251 (JP)
(74) Representative: Ter Meer Steinmeister & Partner
(86) International application number: PCT/JP2024/028772
(87) International publication number: WO 2025/033546

(57) **Abstract**

As a technique that can improve the oily mouthfeel of cereal milk while controlling a total oil/fat content, the present invention provides cereal milk comprising a saccharified cereal product and an oil/fat, wherein the cereal milk comprises 0.5 to 2.8% of a lipid and comprises at least a saturated fatty acid-rich vegetable oil/fat as the oil/fat, and a ratio of a saturated fatty acid to a total fatty acid is 20% or more.

## Description

### Technical Field

The present disclosure relates to cereal milk, a method for producing the same, and a method for improving the richness of the same. More specifically, the present disclosure relates to cereal milk improved in richness while controlling a total oil/fat content, for example.

### Background Art

Plant milk such as oat milk is supplemented with a vegetable oil/fat (sunflower oil, rice oil, etc.) in order to impart oily mouthfeel thereto. However, the vegetable oil/fat has weaker oily mouthfeel than that of a milk fat and therefore results in plant milk difficult to drink due to a lack of richness. A larger amount of the vegetable oil/fat added in order to improve the oily mouthfeel of plant milk for better drinkability increases oily mouthfeel and offering richness, which makes it drinkable, though a calorie content increases. Therefore, drinkability and health are difficult to achieve at the same time.

### Summary of Invention

### Technical Problem

A main object of the present disclosure is to provide a technique that can improve the oily mouthfeel of cereal milk while controlling a total oil/fat content.

### Solution to Problem

In order to attain the object, the present disclosure provides the following items [1] to [23].
[1] Cereal milk comprising a saccharified cereal product and an oil/fat, wherein
   the cereal milk comprises 0.5 to 2.8% of a lipid and comprises at least a saturated fatty acid-rich vegetable oil/fat as the oil/fat, and
   a ratio of a saturated fatty acid to a total fatty acid in the cereal milk is 20% or more.
[2] The cereal milk according to [1], wherein a content of the saturated fatty acid-rich vegetable oil/fat is 0.3 to 2.3%, and a content of an unsaturated fatty acid-rich vegetable oil/fat is 0 to 2.0%.
[3] The cereal milk according to [2], wherein the ratio of the saturated fatty acid to the total fatty acid in the cereal milk is 55% or more.
[4] The cereal milk according to [2] or [3], wherein
   the saturated fatty acid-rich vegetable oil/fat is any one or more members selected from the group consisting of coconut oil/fat, palm oil, palm kernel oil, and/or a hydrogenated, transesterified, or fractionated product thereof, and
   the unsaturated fatty acid-rich vegetable oil/fat is any one or more members selected from the group consisting of sunflower oil, rice oil, rapeseed oil, soybean oil, almond oil, and oat oil.
[5] The cereal milk according to any of [1] to [4], wherein the cereal milk comprises 0.01 to 0.5% of an emulsifier.
[6] The cereal milk according to [5], wherein the emulsifier is any one or more members selected from the group consisting of sucrose fatty acid ester, sodium stearoyl lactate, succinic acid monoglyceride, citric acid monoglyceride, and diacetyl tartaric acid monoglyceride.
[7] The cereal milk according to [6], wherein the emulsifier is sucrose fatty acid ester having HLB of 2 to 16.
[8] The cereal milk according to any of [1] to [7], wherein the cereal milk is free from animal protein.
[9] The cereal milk according to any of [1] to [8], wherein the saccharified cereal product is any one or more members selected from the group consisting of a saccharified oat product, a saccharified rice product, a saccharified barley product, a saccharified corn product, and a saccharified potato product.
[10] A method for producing cereal milk comprising a saccharified cereal product and an oil/fat, the production method comprising the step of
   adding 0.3 to 2.3% of a saturated fatty acid-rich vegetable oil/fat and 0 to 2.0% of an unsaturated fatty acid-rich vegetable oil/fat to the saccharified cereal product such that a total lipid content is 0.5 to 2.8% and a ratio of a saturated fatty acid to a total fatty acid is 20% or more.
[11] The production method according to [10], wherein
   the saturated fatty acid-rich vegetable oil/fat is any one or more members selected from the group consisting of coconut oil/fat, palm oil, palm kernel oil, and/or a hydrogenated, transesterified, or fractionated product thereof, and
   the unsaturated fatty acid-rich vegetable oil/fat is any one or more members selected from the group consisting of sunflower oil, rice oil, rapeseed oil, soybean oil, almond oil, and oat oil.
[12] The production method according to [10] or [11], wherein the method comprises adding 0.01 to 0.5% of an emulsifier.
[13] The production method according to any of [10] to [12], wherein the emulsifier is any one or more members selected from the group consisting of sucrose fatty acid ester, sodium stearoyl lactate, succinic acid monoglyceride, citric acid monoglyceride, and diacetyl tartaric acid monoglyceride.
[14] The production method according to [13], wherein the emulsifier is sucrose fatty acid ester having HLB of 2 to 16.
[15] The production method according to any of [10] to [14], wherein the cereal milk is free from animal protein.
[16] The production method according to any of [10] to [15], wherein the saccharified cereal product is any one or more members selected from the group consisting of a saccharified oat product, a saccharified rice product, a saccharified barley product, a saccharified corn product, and a saccharified potato product.
[17] A method for improving the richness of cereal milk comprising a saccharified cereal product and an oil/fat, the method comprising the step of
   adding 0.3 to 2.3% of a saturated fatty acid-rich vegetable oil/fat and 0 to 2.0% of an unsaturated fatty acid-rich vegetable oil/fat to the saccharified cereal product such that a total lipid content is 0.5 to 2.8% and a ratio of a saturated fatty acid to a total fatty acid is 20% or more.
[18] The method according to [17], wherein
   the saturated fatty acid-rich vegetable oil/fat is any one or more members selected from the group consisting of coconut oil/fat, palm oil, palm kernel oil, and/or a hydrogenated, transesterified, or fractionated product thereof, and
   the unsaturated fatty acid-rich vegetable oil/fat is any one or more members selected from the group consisting of sunflower oil, rice oil, rapeseed oil, soybean oil, almond oil, and oat oil.
[19] The method according to [17] or [18], wherein the method comprises adding 0.01 to 0.5% of an emulsifier.
[20] The method according to any of [17] to [19], wherein the emulsifier is any one or more members selected from the group consisting of sucrose fatty acid ester, sodium stearoyl lactate, succinic acid monoglyceride, citric acid monoglyceride, and diacetyl tartaric acid monoglyceride.
[21] The method according to [20], wherein the emulsifier is sucrose fatty acid ester having HLB of 2 to 16.
[22] The method according to any of [17] to [21], wherein the cereal milk is free from animal protein.
[23] The method according to any of [17] to [22], wherein the saccharified cereal product is any one or more members selected from the group consisting of a saccharified oat product, a saccharified rice product, a saccharified barley product, a saccharified corn product, and a saccharified potato product.

### Advantageous Effects of Invention

The present disclosure provides a technique that can improve cereal milk while controlling a total oil/fat content.

### Description of Embodiments

Hereinafter, preferred embodiments for carrying out the present disclosure will be described. Embodiments described below disclose one example of representative embodiments of the present disclosure, and the scope of the present disclosure is not narrowly interpreted thereby.

### [Cereal milk]

The cereal milk according to the present disclosure comprises a saccharified cereal product and an oil/fat, and optionally, an emulsifier.

The saccharified cereal product is an ingredient obtained from a starch-containing cereal ingredient by enzymatic treatment or the like for the degradation of starch. The saccharified cereal product can be a saccharified oat product, a saccharified rice product, a saccharified barley product, a saccharified corn product, a saccharified potato product, or the like and is not particularly limited. The cereal milk may comprise one or two or more of these saccharified cereal products. The saccharified cereal product is preferably a saccharified oat product or a saccharified rice product, most preferably a saccharified oat product, from the viewpoint of the flavor of the cereal milk.

The content of the saccharified cereal product is calculated on the basis of a solid content obtained by subtracting a water content in the saccharified cereal product from the saccharified cereal product. The cereal milk contains the saccharified cereal product at a solid content of preferably 0.5 to 20%, preferably 1 to 10%, further preferably 2 to 8%, most preferably 3 to 7%.

A saturated fatty acid-rich vegetable oil/fat contained as the oil/fat can be coconut oil/fat, palm oil, palm kernel oil, or the like and is not particularly limited. Alternatively, the saturated fatty acid-rich vegetable oil/fat may be a hydrogenated, transesterified, or fractionated product of such a vegetable oil/fat. The cereal milk may comprise one or two or more of these saturated fatty acid-rich vegetable oils/fats.

The content of the saturated fatty acid-rich vegetable oil/fat is 0.3 to 2.3% and is preferably 0.5 to 2.3%, more preferably 1.2 to 2.3%, further preferably 1.8 to 2.3%, from the viewpoint of flavor. On the other hand, in the case of drinking the cereal milk regularly, excessive ingestion of a lipid might be harmful to health. Therefore, a smaller saturated fatty acid-rich vegetable oil/fat content is more preferred without impairing flavor. The content is preferably 0.3 to 1.8%, more preferably 0.3 to 1.2%, further preferably 0.3 to 0.5%.

An unsaturated fatty acid-rich vegetable oil/fat contained as the oil/fat can be sunflower oil, rice oil, rapeseed oil, soybean oil, almond oil, oat oil, or the like and is not particularly limited. The cereal milk may comprise one or two or more of these unsaturated fatty acid-rich vegetable oils/fats.

The content of the unsaturated fatty acid-rich vegetable oil/fat is 0 to 2.0%, preferably 0 to 1.5%, more preferably 0 to 0.8%, further preferably 0 to 0.5%.

In this context, in the present disclosure, the "saturated fatty acid-rich vegetable oil/fat" is defined as a vegetable oil/fat having a saturated fatty acid content of 50% or more among fatty acids constituting the oil/fat. The "unsaturated fatty acid-rich vegetable oil/fat" is defined as a vegetable oil/fat having a saturated fatty acid content of less than 50% among fatty acids constituting the oil/fat.

The saturated fatty acid content in the vegetable oil/fat can be measured by gas chromatography.

In the cereal milk according to the present disclosure, the ratio of a saturated fatty acid to a total fatty acid as the total amount of a fatty acid contained in the saccharified cereal product and fatty acids contained in the saturated fatty acid-rich vegetable oil/fat and the unsaturated fatty acid-rich vegetable oil/fat is 20% or more. The ratio of the saturated fatty acid to the total fatty acid is preferably 30% or more, 35% or more, or 40% or more, more preferably 45% or more, 50% or more, or 55% or more, further preferably 60% or more, 65% or more, or 70% or more, most preferably 75% or more.

The ratio of the saturated fatty acid to the total fatty acid in the cereal milk can be calculated by gas chromatography.

The cereal milk according to the present disclosure contains 0.5 to 2.8% of a total lipid as the total amount of a lipid contained in the saccharified cereal product and the saturated fatty acid-rich vegetable oil/fat and the unsaturated fatty acid-rich vegetable oil/fat. The content of the total lipid is preferably 1.0-2.8%, more preferably 1.5-2.8%, from the viewpoint of flavor. On the other hand, in the case of drinking the cereal milk regularly, excessive ingestion of a lipid might be harmful to health. Therefore, a smaller lipid content is more preferred without impairing flavor. The content is preferably 0.5 to 2.2%, more preferably 0.5 to 1.8%.

The total lipid content in the cereal milk can be measured by a known approach such as the Gerber method, the Roese-Gottlieb method, or a chloroform-methanol mixed liquid extraction method. In the present disclosure, particularly, a chloroform-methanol mixed liquid extraction method is applicable.

The cereal milk according to the present disclosure comprises the saturated fatty acid-rich vegetable oil/fat and the unsaturated fatty acid-rich vegetable oil/fat so as to satisfy the content ranges and the saturated fatty acid ratio ranges described above. The cereal milk thereby exerts sufficient oily mouthfeel and has improved flavor, while controlling a calorie content by keeping the amount of the total lipid used within the content range described above.

Since the total lipid content of bovine milk is reportedly approximately 3.8%, the total lipid content (0.5 to 2.8%), which is lower by 1% or more therethan, of the cereal milk according to the present disclosure is desirable for cereal milk preferred in terms of a lower calorie content than that of bovine milk.

Sucrose fatty acid ester, sodium stearoyl lactate, succinic acid monoglyceride, citric acid monoglyceride, or diacetyl tartaric acid monoglyceride is used as the emulsifier. The emulsifier is more preferably sucrose fatty acid ester, sodium stearoyl lactate, or diacetyl tartaric acid monoglyceride. In the sucrose fatty acid ester, particularly preferably, a fatty acid having 18 carbon atoms occupies 50% or more of fatty acids constituting the sucrose fatty acid ester, and a monoester content is 70% by mass or less.

One of these emulsifiers may be used singly, or a plurality thereof may be used in combination. Particularly, two or more of the emulsifiers are preferably used in combination. An emulsifier other than sucrose fatty acid ester, sodium stearoyl lactate, and succinic acid monoglyceride, citric acid monoglyceride, and diacetyl tartaric acid monoglyceride may be further combined therewith.

The content of the emulsifier is preferably 0.01 to 0.5%, preferably 0.01 to 0.20%, more preferably 0.03 to 0.15%, from the viewpoint of stabilizing the emulsification of the cereal milk.

The cereal milk according to the present disclosure comprises the emulsifier in the content range described above and thereby exhibits favorable emulsion stability even when comprising no animal protein such as casein.

When the ratio of the saturated fatty acid to the total fatty acid is high in the cereal milk, particularly, when the ratio of the saturated fatty acid to the total fatty acid is 55% or more, a problem of emulsion stability tends to arise. In response to such a problem, sucrose fatty acid ester is preferably used as the emulsifier.

The content of the sucrose fatty acid ester is preferably 0.01 to 0.5%, preferably 0.01 to 0.20%, more preferably 0.03 to 0.15%, based on the cereal milk.

The HLB of the sucrose fatty acid ester is preferably 2 to 16, further preferably 4 to 16, particularly preferably 6 to 16, most preferably 10 to 16.

Sucrose palmitate (the number of carbon atoms: 16), sucrose stearate (the number of carbon atoms: 18), sucrose oleate (the number of carbon atoms: 18, the number of double bonds: 1), sucrose behenate (the number of carbon atoms: 22), sucrose erucate (the number of carbon atoms: 22, the number of double bonds: 1), sucrose myristate (the number of carbon atoms: 14), or sucrose laurate (the number of carbon atoms: 12) can be used as the sucrose fatty acid ester. Sucrose palmitate (the number of carbon atoms: 16) and sucrose stearate (the number of carbon atoms: 18) are preferred, and sucrose palmitate (the number of carbon atoms: 16) is particularly preferred.

Such sucrose fatty acid ester produces high emulsion stability even when the cereal milk is rich in an oil/fat having a high ratio of the saturated fatty acid. This is presumably because a sucrose structure, which is a hydrophilic moiety of the sucrose fatty acid ester, has a hard structure derived from the cyclic structure of a disaccharide, as compared with hydrophilic moieties of other emulsifiers, and suppresses partial coalescence of oil droplets ascribable to coarse crystals of the oil/fat containing the saturated fatty acid. It is known that proteins in cereal milk contribute to improvement in emulsion stability. Use of the highly hydrophilic sucrose fatty acid ester in the cereal milk richer in highly hydrophobic proteins than bovine milk produces high emulsion stability, presumably because the highly hydrophobic proteins are coordinated from the oil side to the oil-water interface while the highly hydrophilic sucrose fatty acid ester is coordinated from the water side to the oil-water interface, forming a dense interface membrane.

It is further known that dietary fiber in cereal milk influences emulsion stability by causing bridging flocculation, depletion flocculation, and the like. Use of the sucrose fatty acid ester for the cereal milk richer in dietary fiber than bovine milk produces high emulsion stability, presumably because the sucrose fatty acid ester is adsorbed to the dietary fiber to enhance the water dispersibility of the dietary fiber and to suppress bridging flocculation and depletion flocculation.

The HLB of "RYOTO(R) Sugar Ester" is described as an approximate figure (as a numeric value with the term "approximately") in a catalog (see the homepage of Mitsubishi Chemical Corp.; http://www.mfc.co.jp/product/nyuuka/ryoto_syuga/list.html ), and this numeric value can be regarded as the HLB of the emulsifier (fatty acid esters) according to the present disclosure. In the case of using other products as the emulsifier, catalog values can also be referred to for HLB. If any catalog value is unknown or in the case of synthesizing the emulsifier by oneself for use, HLB can be determined in accordance with a known method. The method for calculating HLB includes the Atlas method, the Griffin method, the Davies method, the Kawakami method, and the like and also includes a method of determining HLB from a retention time in high-performance liquid chromatography. For example, (i) when fatty acid esters as a synthesized mixture have known composition, the HLB of each of the fatty acid esters is calculated by the Griffin method and then, the weighted average thereof can be regarded as the HLB of the fatty acid esters. (ii) When fatty acid esters have unknown composition, the HLB of the fatty acid esters can be determined by comparing samples of fatty acid esters having known HLB with retention times in high-performance liquid chromatography (HPLC) .

The cereal milk according to the present disclosure may comprise an additional component other than the saccharified cereal product, the oil/fat, and the emulsifier.

Examples of the additional component include plant-derived proteins, polysaccharide degradation products, dietary fiber, polysaccharide thickeners, sweeteners, minerals, pH adjusters, and fragrances.

Examples of the plant-derived protein specifically include chickpea protein, soybean protein, pea protein, lentil protein, almond protein, oat protein, rice protein, and hempseed protein. Two or more types of these plant-derived proteins may be used in combination.

Examples of the polysaccharide degradation product include dextrin, indigestible dextrin, isomaltodextrin, soluble starch, thin glue starch, amylodextrin, white dextrin, yellow dextrin, British gum, erythrodextrin, achrodextrin, maltodextrin, enzyme-modified maltodextrin, starch syrup, maltose syrup, and their reduced products such as reduced indigestible dextrin, reduced saccharified starch, reduced maltose starch syrup, and reduced polydextrose.

Examples of the dietary fiber include water-soluble dietary fiber such as pectin, agarose, glucomannan, polydextrose, sodium alginate, inulin, carrageenan, guar gum, locust bean gum, tara gum, xanthan gum, gellan gum, fermented cellulose, pullulan, and soybean polysaccharides, and water-insoluble dietary fibers, such as cellulose, lignin, chitin, and chitosan.

Examples of the polysaccharide thickener include native gellan, xanthan gum, carrageenan, pectin, locust bean gum, and guar gum.

Examples of the sweetener include glucose, fructose, isomerized liquid sugar, arabinose, mannose, galactose, xylose, psicose, allose, tagatose, lactose, sucrose, maltose, trehalose, cellobiose, nigerose, isomaltose, gentibiose, palatinose, mannobiose, oligotose, fructooligosaccharide, soybean oligosaccharide, galactosaccharide, lactosucrose, xylooligosaccharide, raffinose, mannooligosaccharide, erythritol, maltitol, xylitol, lactitol, mannitol, sorbitol, reduced palatinose, stevia, glycyrrhiza, acesulfame K, sucralose, neotame, aspartame, and saccharin. One type of these sweeteners may be used singly, or two or more types thereof may be used in combination.

Examples of the mineral include sodium chloride, potassium chloride, and magnesium chloride.

Examples of the pH adjuster include dipotassium hydrogen phosphate, tripotassium phosphate, citric anhydride, disodium hydrogen phosphate, trisodium hydrogen phosphate, tripotassium citrate, trisodium citrate, dipotassium hydrogen citrate, disodium hydrogen citrate, sodium bicarbonate, lactic acid, and calcium lactate.

Fragrances such as various synthetic fragrances, natural fragrances, natural essential oils, and plant extracts can be used.

### [Method for producing cereal milk and method for improving richness of cereal milk]

The present disclosure also provides a method for producing cereal milk and a method for improving the richness of cereal mil, comprising the step of adding an oil/fat (saturated fatty acid-rich vegetable oil/fat and unsaturated fatty acid-rich vegetable oil/fat) to a saccharified cereal product so as to satisfy the content ranges and the saturated fatty acid ratio ranges described above. These methods can produce cereal milk that exerts sufficient oily mouthfeel and has improved flavor, while controlling a calorie content by keeping the amount of the total lipid used within the content range described above.

The production of the cereal milk can be performed in accordance with a heretofore known approach as long as the oil/fat (saturated fatty acid-rich vegetable oil/fat and unsaturated fatty acid-rich vegetable oil/fat) is added so as to satisfy the content ranges and the saturated fatty acid ratio ranges described above. The cereal milk is produced, for example, as follows.

First, the saccharified cereal product and the oil/fat and optionally, the emulsifier and the additional component listed above are mixed, if necessary, together with water, to prepare a mixed liquid.

Subsequently, the obtained mixed liquid is emulsified by stirring. Any emulsification method can be used without particular limitations as long as the method is a homogenizing emulsification method usually used for foods. For example, any of a method using a homogenizer, a method using a colloid mill, and a method using a homomixer can be used. This homogenizing emulsification treatment is usually performed under a warming condition of 40 to 80°C.

The emulsification treatment may be performed only once or may be performed twice or more (plural times).

The emulsification treatment that is performed plural times means that an operation of introducing a material to be treated to an emulsifying machine, performing emulsification treatment under predetermined conditions, and then taking the emulsified product out of the machine is performed plural times. In this context, the emulsification treatment may be performed plural times using the same emulsifying machine or different emulsifying machines.

For example, preliminary emulsification under a low pressure or ordinary pressure condition may be performed using a paddle mixer, a homomixer, an ultrasonic homogenizer, a colloid mill, a kneader, an inline mixer, a static mixer, an Onreitor, or the like, prior to high-pressure emulsification treatment which will be described below in detail.

This preliminary emulsification is performed at usually 30°C or higher, preferably 40°C or higher, more preferably 50°C or higher, and usually 100°C or lower, preferably 90°C or lower, more preferably 80°C or lower, for usually 0.005 to 20 hours, preferably 0.01 to 10 hours.

For large-scale production in a factory, high-pressure emulsification treatment is preferred because of higher production efficiency and larger throughput per hour.

The high-pressure emulsification treatment is a treatment in which the pressure of a material to be treated that has become a high pressure state by liquid supply to, for example, the space or flow channel of a narrow homogenizing valve, or a nozzle, using a pump is reduced at once; the flow rate is accelerated by the energy of the pressure difference; turbulent flow, cavitation, or shear force is caused by high-speed collision of the material to be treated to a valve or a ring or to another material to be treated; and the material to be treated is fragmented and emulsified by the energy.

Specifically, the high-pressure emulsification is emulsification in a state in which the treatment pressure at the time of the high-pressure emulsification for a single-stage system or the treatment pressure at the time of the high-pressure emulsification of at least one stage for a multistage, for example, two-stage, system is preferably 10 MPa or higher, more preferably 15 MPa or higher. A higher treatment pressure of the emulsification treatment is more preferred because the oil/fat can be uniformly emulsified and dispersed as sufficiently fine particles.

The upper limit of the treatment pressure is not particularly limited in terms of emulsion stability and is usually 200 MPa or lower in terms of the pressure resistance of the emulsifying machine used and industrial practical use. The treatment pressure is preferably 100 MPa or lower, more preferably 80 MPa or lower, further preferably 50 MPa or lower, most preferably 45 MPa or lower.

Examples of a commercially available emulsifying machine for use in the high-pressure emulsification treatment include valve type such as GAURIN 125T and 132T manufactured by SPX FLOW, Inc., and HV-5H and HV-5E manufactured by Izumi Food Machinery Co., Ltd., nozzle type such as Nanovater manufactured by Yoshida Kikai Co., Ltd. and Star Burst 100 manufactured by Sugino Machine Ltd., and chamber type such as microfluidizers manufactured by Powrex Corp.

The throughput per hour in the high-pressure emulsification treatment is usually 0.1 t/hr or more, preferably 1 t/hr or more, more preferably 5 t/hr or more, most preferably 10 t/hr or more. Such throughput enables the high-pressure emulsification treatment to be carried out without reducing production efficiency. The upper limit of the throughput per hour in the high-pressure emulsification treatment is not particularly limited and is usually 500 t/hr or less.

The emulsification treatment time of each run differs depending on the amount of throughput or the treatment pressure. Particularly, for large-scale production in a factory, the emulsification treatment time is usually 0.005 hours or longer, preferably 0.01 hours or longer, most preferably 0.1 hours or longer, and usually 20 hours or shorter, preferably 10 hours or shorter, more preferably 5 hours or shorter, particularly preferably 2 hours or shorter, most preferably 1 hour or shorter, from the viewpoint of obtaining favorable emulsion stability without impairing productivity.

The temperature at the time of the high-pressure emulsification treatment is usually 30°C or higher, preferably 40°C or higher, more preferably 50°C or higher, and usually 100°C or lower, preferably 90°C or lower, more preferably 80°C or lower. The treatment temperature is preferably equal to or higher than the lower limit in terms of emulsification efficiency. The treatment temperature is preferably equal to or lower than the upper limit in terms of the handleability of an emulsion. This treatment temperature may be different or the same among runs.

The pH of the material to be treated at the time of the emulsification treatment is usually 5.0 or higher, preferably higher than 5.0, more preferably 5.2 or higher, further preferably 5.5 or higher, particularly preferably 6.0 or higher, and usually 9.0 or lower, preferably 8.0 or lower, from the viewpoint of sufficiently dispersing the emulsifier used in water and efficiently emulsifying the oil/fat. The pH of the material to be treated can be adjusted by adding a pH adjuster such as sodium bicarbonate or phosphate or other additives to the material to be treated.

After this homogenizing emulsification treatment, sterilization treatment such as UHT sterilization or retort sterilization is performed. The retort sterilization is usually performed under conditions of 110 to 140°C, for example, 121°C, and 10 to 40 minutes. On the other hand, the UHT sterilization, which is used in beverages for PET bottles or the like, is ultrahigh-temperature sterilization involving a higher temperature, for example, a sterilization temperature of 120 to 150°C, and a sterilization value (Fo) corresponding to 10 to 50 at 121°C. The UHT sterilization can be performed by a known method such as a direct heating scheme, for example, steam injection which directly blows steam into beverages, or steam infusion which sprays beverages into steam, followed by heating, or an indirect heating scheme using a surface heat exchanger such as a plate or a tube. For example, a plate-type sterilization apparatus can be used.

The produced cereal milk is suitable for packaged beverages and can be applied to, for example, canned beverages, PET bottle beverages, paper-packed beverages, bottled beverages, and plastic cup beverages.

### Examples

Hereinafter, the present disclosure will be described further specifically with reference to Examples. However, the present disclosure is not limited to the description of Examples given below without departing from the spirit of the present invention. The term "%" means % by mass unless otherwise specified.

### [Ingredient]

The following ingredients were used in the preparation of beverages in Examples and Comparative Examples given below.

### <Saccharified oat product>

Concentrated oat milk T: manufactured by Kohsei Industrial Co., Ltd. (oil/fat content: 3.4% by mass, saturated fatty acid content: 16.8% by mass, solid content: 40%)
Saccharified oat powder: manufactured by Dohler (oil/fat content: 8.5% by mass, saturated fatty acid content: 20.0%, solid content: 98%)

### <Saccharified rice product>

Saccharified rice solution: manufactured by API Co., Ltd. (oil/fat content: 0.5%% by mass, saturated fatty acid content: 18.0%, solid content: 42%)

### <Emulsifier>

Examples 1 to 13 and Comparative Examples 1 to 6: sucrose fatty acid ester RYOTO Sugar Ester S-770 manufactured by Mitsubishi Chemical Corp. (HLB: 7)
Examples 15 to 24: emulsifiers shown in Table 2

### <Oil/fat>

Extremely hardened coconut oil (saturated fatty acid content: 100% by mass)
Refined coconut oil (saturated fatty acid content: 91% by mass)
Sunflower oil: Sunflower Oil Olein-Rich manufactured by Showa Sangyo Co., Ltd. (saturated fatty acid content: 8% by mass)

### <Additional component>

Sodium bicarbonate: manufactured by FUJIFILM Wako Pure Chemical Corp.
Granulated sugar: manufactured by Nissin Sugar Manufacturing Co., Ltd.
Common salt: manufactured by The Salt Industry Center of Japan

### [Examples 1 to 12 and Comparative Examples 1 to 6: Study on flavor]

Water was mixed with 13.6% of the saccharified oat product, 0.05% of common salt, 0.07% of sodium bicarbonate, and 3% of granulated sugar and the components of Table 1 added at the contents described in the table, and these components were dissolved therein. Water was further added to adjust the whole amount to 100% by mass. This solution was heated to 70°C and homogenized using a high-pressure homogenizer to prepare oat milk.

**[Table 1]**

| | Saccharified oat liquid | Saturated fatty acid-containing vegetable oil/fat (hardened coconut oil) content | Saturated fatty acid-containing vegetable oil/fat (purified coconut oil) content | Unsaturated fatty acid-containing vegetable oil/fat (sunflower oil) content | Lipid (%) | Ratio (%) of saturated fatty acid to total fatty acid | Emulsifier | Oily mouthfeel |
|---|---|---|---|---|---|---|---|---|
| Example 1 | 13.60% | 0.35% | 0% | 0% | 0.81 | 52.6 | 0.02% | 3 |
| Example 2 | 13.60% | 0.91% | 0% | 0% | 1.37 | 72.0 | 0.05% | 4 |
| Example 3 | 13.60% | 1.40% | 0% | 0% | 1.86 | 79.3 | 0.08% | 5 |
| Example 4 | 13.60% | 1.61% | 0% | 0% | 2.07 | 81.4 | 0.09% | 5 |
| Example 5 | 13.60% | 2.10% | 0% | 0% | 2.56 | 85.0 | 0.12% | 6 |
| Example 6 | 13.60% | 2.10% | 0% | 0% | 2.56 | 85.0 | 0.00% | 6 |
| Example 7 | 13.60% | 1.50% | 0% | 0.60% | 2.56 | 60.7 | 0.00% | 4 |
| Example 8 | 13.60% | 1.80% | 0% | 0.30% | 2.56 | 72.9 | 0.00% | 5 |
| Example 9 | 13.60% | 0.35% | 0% | 0.91% | 1.72 | 29.1 | 0.07% | 3 |
| Example 10 | 13.60% | 0.35% | 0% | 1.40% | 2.21 | 24.4 | 0.10% | 3 |
| Example 11 | 13.60% | 0% | 1.40% | 0% | 1.86 | 72.6 | 0.09% | 4 |
| Example 12 | 13.60% | 0% | 2.10% | 0% | 2.56 | 77.6 | 0.12% | 5 |
| Comparative Example 1 | 13.60% | 0% | 0% | 0% | 0.71 | 16.8 | 0.01% | 1 |
| Comparative Example 2 | 13.60% | 2.52% | 0% | 0% | 2.98 | 87.1 | 0.14% | 6 |
| Comparative Example 3 | 13.60% | 0% | 0% | 0.74% | 1.20 | 11.4 | 0.04% | 1 |
| Comparative Example 4 | 13.60% | 0% | 0% | 0.91% | 1.37 | 11.0 | 0.05% | 1 |
| Comparative Example 5 | 13.60% | 0% | 0% | 1.40% | 1.86 | 10.2 | 0.08% | 2 |
| Comparative Example 6 | 13.60% | 0% | 0% | 2.60% | 3.06 | 9.3 | 0.15% | 3 |

### <Flavor evaluation of beverage>

Each oat milk was subjected to flavor evaluation by two trained panelists and evaluated according to the following criteria.
1: No fatty mouthfeel is perceived.
2: Fatty mouthfeel is slightly perceived.
3: A little fatty mouthfeel is perceived.
4: Fatty mouthfeel is perceived.
5: Fatty mouthfeel is slightly strongly perceived.
6: Fatty mouthfeel is strongly perceived.

In Examples 1 to 12, favorable oily mouthfeel was obtained with a score of 3 or greater.

In Examples 1 to 6, 11, and 12, favorable oily mouthfeel was obtained without the addition of the unsaturated fatty acid-containing vegetable oil/fat, and the oily mouthfeel was improved with increase in the content of the saturated fatty acid-containing vegetable oil/fat.

In Examples 7 and 8, when the amount of the lipid was 2.56%, the oily mouthfeel was improved with increase in the ratio of the saturated fatty acid to the total fatty acid.

In Comparative Example 1 in which neither the saturated fatty acid-containing vegetable oil/fat nor the unsaturated fatty acid-containing vegetable oil/fat was added, the oily mouthfeel was graded as 1. On the other hand, in Comparative Example 2 in which only the saturated fatty acid-containing vegetable oil/fat was added at a content of 2.52%, the oily mouthfeel was improved, though the total lipid was 2.98%, which caused increase in calorie content.

In Comparative Examples 3 to 5 in which only the unsaturated fatty acid-containing vegetable oil/fat was added, no favorable oily mouthfeel was obtained. In Comparative Example 6 in which the content of only the unsaturated fatty acid-containing vegetable oil/fat was increased to 2.60%, the oily mouthfeel was improved, though the total lipid was 3.06%, which caused increase in calorie content.

### [Example 13: Study on flavor]

Cereal milk was prepared using the saccharified rice product instead of the saccharified oat product as the saccharified cereal product.

In water, 10% of the saccharified rice product, 0.1% of common salt, 2.1% of extremely hardened coconut oil, and 0.12% of the emulsifier were dissolved, and water was further added thereto to adjust the whole amount to 100% by mass. This solution was heated to 70°C and homogenized to prepare rice milk.

In the prepared rice milk, the total lipid was 2.2%, and the ratio of the saturated fatty acid to the total fatty acid was 98.1%. As a result of subjecting this rice milk to flavor evaluation, fatty mouthfeel was slightly strongly felt (score: 5), and favorable flavor was obtained.

### [Examples 14 to 24: Study on emulsion stability]

Water was mixed with 5.44% of the saccharified oat powder, 0.05% of common salt, 0.07% of sodium bicarbonate, 2.1% of hardened coconut oil, and 3% of granulated sugar and the emulsifiers of Table 2 were added at the contents described in the table and mixed, and these components were dissolved therein. Water was further added to adjust the whole amount to 100% by mass. This solution was heated to 70°C, homogenized using a high-pressure homogenizer, and then filled into a can container, which was then hermetically sealed and retort-sterilized at 121°C for 30 minutes to prepare canned oat milk (total lipid: 2.56%, ratio of the saturated fatty acid to the total fatty acid: 85.6%).

### <Stability evaluation of beverage>

Each canned oat milk was refrigerated and left standing overnight. On the next day, the can was opened, and the liquid contents were transferred to a cup. In this respect, the occurrence of oil particles was visually observed and evaluated according to the following criteria.
1: Oil particles are present.
2: Oil particles are slightly present.
3: Oil particles are very slightly present.
4: No oil particles are present with a favorable state.

The oat milk of Example 14 without the use of the emulsifier was graded as 1 due to the presence of oil particles.

The oat milk containing sucrose fatty acid ester having high HLB (16 or 11) in Examples 15 to 17 exhibited favorable emulsion stability with a score of 4.

The oat milk containing sucrose fatty acid ester having moderate HLB (9 or 7) in Examples 18 and 19 exhibited slightly favorable emulsion stability with a score of 3.

The oat milk containing sucrose fatty acid ester having slightly low HLB (5) in Example 20 exhibited emulsion stability with a score of 2.

The oat milk containing sucrose fatty acid ester having low HLB (1) in Example 12 and the oat milk containing the emulsifier other than sucrose fatty acid ester in Examples 22 to 24 were graded as 1. When the cereal milk had a high ratio of the saturated fatty acid to the total fatty acid, sucrose fatty acid ester having high HLB was found useful for improvement in emulsion stability. The HLB of the sucrose fatty acid ester was presumed to be preferably 5 to 16, more preferably 7 to 16, further preferably 9 to 16, particularly preferably 11 to 16.

**[Table 2]**

| | Type of emulsifier | Amount of emulsifier | Emulsification evaluation |
|---|---|---|---|
| Example 14 | - | - | 1 |
| Example 15 | Sucrose palmitate (60% monoester, 30% diester, 5% triester, 5% di- or higher ester, constituent fatty acid: 95% palmitic acid) | 0.15% | 4 |
| | HLB: approximately 11 | | |
| Example 16 | RYOTO Sugar Ester S-1670 (manufactured by Mitsubishi Chemical Corp.) | 0.15% | 4 |
| | HLB: approximately 16 | | |
| Example 17 | RYOTO Sugar Ester S-1170 (manufactured by Mitsubishi Chemical Corp.) | 0.15% | 4 |
| | HLB: approximately 11 | | |
| Example 18 | RYOTO Sugar Ester S-970 (manufactured by Mitsubishi Chemical Corp.) | 0.15% | 3 |
| | HLB: approximately 9 | | |
| Example 19 | RYOTO Sugar Ester S-770 (manufactured by Mitsubishi Chemical Corp.) | 0.15% | 3 |
| | HLB: approximately 7 | | |
| Example 20 | RYOTO Sugar Ester S-570 (manufactured by Mitsubishi Chemical Corp.) | 0.15% | 2 |
| | HLB: approximately 5 | | |
| Example 21 | RYOTO Sugar Ester S-170 (manufactured by Mitsubishi Chemical Corp.) | 0.15% | 1 |
| | HLB: approximately 1 | | |
| Example 22 | Lecithin (SLP Paste, manufactured by Tsuji Oil Mills Co., Ltd.) | 0.15% | 1 |
| Example 23 | Sodium stearoyl lactate (GRINSTED SSL FP55, manufactured by Danisco A/S) | 0.03% | 1 |
| Example 24 | Gellan gum (Kelco Gel HM, manufactured by CP Kelco ApS) | 0.03% | 1 |

## Claims

1. Cereal milk comprising a saccharified cereal product and an oil/fat, wherein
the cereal milk comprises 0.5 to 2.8% of a lipid and comprises at least a saturated fatty acid-rich vegetable oil/fat as the oil/fat, and
a ratio of a saturated fatty acid to a total fatty acid in the cereal milk is 20% or more.

2. The cereal milk according to claim 1, wherein a content of the saturated fatty acid-rich vegetable oil/fat is 0.3 to 2.3%, and a content of an unsaturated fatty acid-rich vegetable oil/fat is 0 to 2.0%.

3. The cereal milk according to claim 2, wherein the ratio of the saturated fatty acid to the total fatty acid in the cereal milk is 55% or more.

4. The cereal milk according to claim 3, wherein
the saturated fatty acid-rich vegetable oil/fat is any one or more members selected from the group consisting of coconut oil/fat, palm oil, palm kernel oil, and/or a hydrogenated, transesterified, or fractionated product thereof, and
the unsaturated fatty acid-rich vegetable oil/fat is any one or more members selected from the group consisting of sunflower oil, rice oil, rapeseed oil, soybean oil, almond oil, and oat oil.

5. The cereal milk according to claim 4, wherein the cereal milk comprises 0.01 to 0.5% of an emulsifier.

6. The cereal milk according to claim 5, wherein the emulsifier is any one or more members selected from the group consisting of sucrose fatty acid ester, sodium stearoyl lactate, succinic acid monoglyceride, citric acid monoglyceride, and diacetyl tartaric acid monoglyceride.

7. The cereal milk according to claim 6, wherein the emulsifier is sucrose fatty acid ester having HLB of 2 to 16.

8. The cereal milk according to claim 7, wherein the cereal milk is free from animal protein.

9. The cereal milk according to claim 8, wherein the saccharified cereal product is any one or more members selected from the group consisting of a saccharified oat product, a saccharified rice product, a saccharified barley product, a saccharified corn product, and a saccharified potato product.

10. A method for producing cereal milk comprising a saccharified cereal product and an oil/fat, the production method comprising the step of
adding 0.3 to 2.3% of a saturated fatty acid-rich vegetable oil/fat and 0 to 2.0% of an unsaturated fatty acid-rich vegetable oil/fat to the saccharified cereal product such that a total lipid content is 0.5 to 2.8% and a ratio of a saturated fatty acid to a total fatty acid is 20% or more.

11. A method for improving the richness of cereal milk comprising a saccharified cereal product and an oil/fat, the method comprising the step of
adding 0.3 to 2.3% of a saturated fatty acid-rich vegetable oil/fat and 0 to 2.0% of an unsaturated fatty acid-rich vegetable oil/fat to the saccharified cereal product such that a total lipid content is 0.5 to 2.8% and a ratio of a saturated fatty acid to a total fatty acid is 20% or more.
